# EUROPÄISCHE PATENTSCHRIFT

(11) **EP 1 725 625 B1**
(45) Veröffentlichungstag und Bekanntmachung des Hinweises auf die Patenterteilung: **16.06.2010**
(21) Anmeldenummer: 04820070.3
(22) Anmeldetag: 25.11.2004
(51) Int. Cl.: C09D 167/08, C09D 5/08

(54) **BESCHICHTUNGSSTOFF, VERFAHREN ZU SEINER HERSTELLUNG UND SEINE VERWENDUNG ZUR HERSTELLUNG TRANSPARENTER, KORROSIONSHEMMENDER BESCHICHTUNGEN**
COATING SUBSTANCE, METHOD FOR THE PRODUCTION THEREOF AND USE THEREOF IN THE PRODUCTION OF TRANSPARENT, CORROSION-INHIBITING COATINGS
MATERIAU DE REVETEMENT, PROCEDE DE FABRICATION ET UTILISATION DANS LA FABRICATION DE REVETEMENTS ANTICORROSION TRANSPARENTS

(30) Priorität: 13.12.2003 DE 10358488
(43) Veröffentlichungstag der Anmeldung: 29.11.2006
(73) Patentinhaber: BASF Coatings GmbH, 48165 Münster (DE)
(72) Erfinder: ALLARD, Maxime, 48159 Münster (DE); REHER, Thomas, 48165 Münster (DE)
(86) Internationale Anmeldenummer: PCT/EP2004/053156
(87) Internationale Veröffentlichungsnummer: WO 2005/056697

(56) Entgegenhaltungen:
- EP-A- 0 634 462
- DE-A- 2 025 313
- PATENT ABSTRACTS OF JAPAN Bd. 009, Nr. 088 (C-276), 17. April 1985 (1985-04-17) & JP 59 219371 A (ATOMU KAGAKU TORIYOU KK), 10. Dezember 1984 (1984-12-10)
- DATABASE WPI Week 197526 Derwent Publications Ltd., London, GB; AN 1975-43595w XP002333758 "Stable coating composition contain phosphoric acid resin" & JP 50 014663 B (YAMAUCHI) 29. Mai 1975 (1975-05-29)

## Beschreibung

Die vorliegende Erfindung betrifft einen neuen, mit aktinischer Strahlung härtbaren Beschichtungsstoff. Außerdem betrifft die vorliegende Erfindung ein neues Verfahren zur Herstellung eines mit aktinischer Strahlung härtbaren Beschichtungsstoffs. Des Weiteren betrifft die vorliegende Erfindung die Verwendung des neuen Beschichtungsstoffs oder des mit Hilfe des neuen Verfahrens hergestellten Beschichtungsstoffs für die Herstellung transparenter, korrosionshemmender Beschichtungen, insbesondere Coil-Coatings, speziell Primerschichten.

Um haftfeste, korrosionshemmende Beschichtungen auf Metallbändern oder Coils, insbesondere aus den üblichen und bekannten Gebrauchsmetallen, wie Zink, Aluminium oder blanker, galvanisierter, elektroverzinkter und phosphatierter Stahl, mit Hilfe des Coil-Coatings-Verfahrens (Römpp Lexikon Lacke und Druckfarben, Georg Thieme Verlag, Stuttgart, New York, 1998, Seite 617, »Walzlackierung«, und Seite 55, »Bandbeschichtung«) zu erzielen, ist es notwendig, die Oberfläche der Metallbänder einer Vorbehandlung zu unterziehen. Dies stellt aber im Rahmen des Coil-Coating-Verfahrens einen zusätzlichen Verfahrenschritt dar, auf den man aus wirtschaftlichen und technischen Gründen verzichten möchte.

Bekanntermaßen dienen Primerschichten der Haftvermittlung zwischen der Metalloberfläche und den darüber liegenden Beschichtungen. Sie können auch in gewissem Umfang zum Korrosionsschutz beitragen. Üblicherweise werden sie aus pigmentierten, lösemittelhaltigen, thermisch härtbaren Beschichtungsstoffen hergestellt. Dies erfordert aber aufwendige Anlagen zum Absaugen und Entsorgen der emittierten Lösemittel, und die Coils müssen auf hohe Temperaturen ("peak metal temperatures", PMT) aufgeheizt werden, um die applizierten Beschichtungsstoffe in der für das Coil-Coating-Verfahren notwendigen Geschwindigkeit auszuhärten. Es wäre daher in hohem Maße wünschenswert, lösemittelfreie, mit aktinischer Strahlung rasch härtbare Beschichtungsstoffe für die Herstellung von Primerschichten zur Verfügung zu haben.

Mit aktinischer Strahlung härtbare, pigmentierte Beschichtungsstoffe für die Herstellung von korrosionshemmenden Beschichtungen, insbesondere Coil-Coatings, speziell korrosionshemmenden Primerschichten, sind bekannt. Sie enthalten üblicherweise olefinisch ungesättigte, saure Phosphorsäure- und/oder Polyphosphorsäureester und korrosionshemmende Zink-, Aluminium- und/oder Zink-Molybdän-Phosphat- und Pyrophosphat-Pigmente.

Die bekannten, mit aktinischer Strahlung härtbaren, pigmentierten Beschichtungsstoffe weisen aber eine vergleichsweise hohe Viskosität auf und können daher beim Coil-Coating-Verfahren nicht problemlos oder überhaupt nicht mit Hilfe des Walzauftrags appliziert werden. Stattdessen müssen höhere Applikationstemperaturen und/oder vergleichsweise aufwendige Extrusionsanlagen mit Breitschlitzdüsen angewandt werden, was beides von Nachteil für das Coil-Coating-Verfahren ist.

Aus den japanischen Patent JP 59 219 371 sind korrosionshemmende Beschichtungszusammensetzungen bekannt die Hydroxyethyl-(meth)acrylphosphate und alkydharze mit einer Öliänge von 40-75% enthalten.

Außerdem reagieren die korrosionshemmenden Phosphat- und Pyrophosphate-Pigmente mit den sauren Phosphorsäure- und Polyphosphorsäureestern, sodass die betreffenden bekannten, mit aktinischer Strahlung härtbaren, pigmentierten Beschichtungsstoffe nur eine Verarbeitungszeit 10 bis 20 Tagen haben und als Zweikomponentensysteme eingesetzt werden müssen. Für Kitte, die der Herstellung von Korrosionsschutzschichten für Stahlkanten dienen, und für Beschichtungsstoffe, die der Herstellung von Korrosionsschutzschichten für Schweißnähte, dienen, werden aber vorzugsweise Einkomponentensysteme eingesetzt.

Nicht zuletzt liefern die bekannten, mit aktinischer Strahlung härtbaren, pigmentierten Beschichtungsstoffe keine transparenten, insbesondere klaren, Beschichtungen, die den optischen Eindruck von blanken Metalloberflächen erhalten oder sogar verstärken können.

Aufgabe der vorliegenden Erfindung ist es, einen neuen, mit aktinischer Strahlung härtbaren, von organischen Lösemitteln im wesentlichen oder völlig freien, Beschichtungsstoff bereitzustellen, der die Nachteile des Standes der Technik nicht mehr länger aufweist, sondern der
- sich leicht herstellen lässt,
- hochreaktiv und dennoch lagerstabil ist,
- als Einkomponentensystem hergestellt, vertrieben, gelagert und verarbeitet werden kann,
- sich besonders leicht und problemlos insbesondere im Rahmen des Coils-Coating-Verfahrens applizieren lässt und
- bei niedrigen Härtungstemperaturen, sehr rasch und ohne Emission flüchtiger organischer Verbindungen ausgehärtet werden kann.

Der neue, mit aktinischer Strahlung härtbare, von organischen Lösemitteln im Wesentlichen oder völlig freie Beschichtungsstoff soll transparente, insbesondere klare, Beschichtungen, insbesondere Coil-Coatings, speziell Primerlacklerungen, liefern, die auch auf nicht vorbehandelten Metalloberflächen, insbesondere der Oberfläche von Gebrauchsmetallen, wie Zink, Aluminium oder blanker, galvanisierter, elektroverzinkter und phosphatierter Stahl,
- eine besonders hohe Haftung,
- eine besonders hohe Zwischenschichthaftung zu den darüber liegenden Beschichtungen,
- eine hervorragende Korrosionsschutzwirkung, insbesondere gegen Weisskorrosion, und
- eine hohe Elastizität auch als dünne Schichten haben und
- den optischen Eindruck von blanken Metalloberflächen erhalten oder sogar verstärken.

Der neue, mit aktinischer Strahlung härtbare, von organischen Lösemitteln im Wesentlichen oder völlig freie Beschichtungsstoff soll sich vor allem als Kitt für die Herstellung von Korrosionsschutzschichten für Stahlkanten und für die Herstellung von Korrosionsschutzschichten für Schweißnähte eignen.

Demgemäß wurde der neue, mit aktinischer Strahlung härtbare, von korrosionshemmenden Pigmenten und von organischen Lösemitteln im Wesentlichen oder völlig freie, flüssige Beschichtungsstoff gefunden, enthaltend
(A) mindestens einen Bestandteil, ausgewählt aus der Gruppe bestehend aus niedermolekularen, oligomeren und polymeren organischen Verbindungen, die mindestens eine mit aktinischer Strahlung aktivierbare Gruppe enthalten, sowie luft- und oxidativ trocknenden Alkydharzen,
(B) mindestens einen Bestandteil, ausgewählt aus der Gruppe, bestehend aus sauren Estern von Polyphosphorsäure und von Monophosphorsäure mit mindestens einer Verbindung (b1), enthaltend mindestens eine Hydroxylgruppe und mindestens eine mit aktinischer Strahlung aktivierbare Gruppe, und
(C) mindestens eine Art von Nanopartikeln.

Im Folgenden wird der neue, mit aktinischer Strahlung härtbare, von korrosionshemmenden Pigmenten und von organischen Lösemitteln im Wesentlichen oder völlig freie, flüssige Beschichtungsstoff als »erfindungsgemäßer Beschichtungsstoff« bezeichnet.

Weitere Erfindungsgegenstände gehen aus der Beschreibung hervor.

Im Hinblick auf den Stand der Technik war es überraschend und für den Fachmann nicht vorhersehbar, dass die Aufgabe, die der vorliegenden Erfindung zugrunde lag, mit Hilfe des erfindungsgemäßen Beschichtungsstoffs gelöst werden konnte.

Insbesondere wies der erfindungsgemäße Beschichtungsstoff die Nachteile des Standes der Technik nicht mehr länger auf, sondern
- ließ sich leicht herstellen,
- war hochreaktiv und dennoch lagerstabil,
- konnte als Einkomponentensystem hergestellt, vertrieben, gelagert und verarbeitet werden,
- ließ sich besonders leicht und problemlos insbesondere im Rahmen des Coils-Coating-Verfahrens applizieren und
- konnte bei niedrigen Härtungstemperaturen, sehr rasch und ohne Emission flüchtiger organischer Verbindungen ausgehärtet werden.

Der erfindungsgemäße Beschichtungsstoff lieferte transparente, insbesondere klare, Beschichtungen, insbesondere Coil-Coatings, speziell Primerlacklerungen, die auch auf nicht vorbehandelten Metalloberflächen, insbesondere der Oberfläche von Gebrauchsmetallen, wie Zink, Aluminium oder blanker, galvanisierter, elektroverzinkter und phosphatierter Stahl,
- eine besonders hohe Haftung,
- eine besonders hohe Zwischenschichthaftung zu den darüber liegenden Beschichtungen,
- eine hervorragende Korrosionsschutzwirkung, insbesondere gegen Weisskorrosion, und
- eine hohe Elastizität auch als dünne Schichten hatten und
- den optischen Eindruck von blanken Metalloberflächen erhielten oder sogar verstärkten.

Der erfindungsgemäße Beschichtungsstoff ist flüssig, d. h., er enthält zwar feste, nichtflüssige Bestandteile, er ist aber bei Raumtemperatur und unter den üblichen und bekannten Bedingungen der Herstellung, der Lagerung und der Applikation stets in einem fluiden Zustand, sodass er mit Hilfe der üblichen und bekannten, beim Coil-Coating-Verfahren angewandten Applikationsmethoden verarbeitet werden kann.

Der erfindungsgemäße Beschichtungsstoff kann als eine Wasser-in-Öl-Dispersion vorliegen, bei der eine diskontinuierliche wässrige Phase in der kontinuierlichen organischen Phase feinteilig dispergiert ist. Der Durchmesser der Tröpfchen der wässrigen Phase kann breit variieren; vorzugsweise liegt er bei 10 nm bis 1000 µm, insbesondere 100 nm bis 800 µm. Die Bestandteile des erfindungsgemäßen Beschichtungsstoffs sind ihrer Hydrophilie oder Hydrophobie (vgl. Römpp Online, Georg Thieme Verlag, Stuttgart, New York, 2002, »Hydrophobie«, »Hydrophilie«) entsprechend über die wässrige Phase und organischen Phase verteilt oder liegen als separate feste Phase vor.

Der erfindungsgemäße Beschichtungsstoff bzw. seine wässrige Phase weist einen pH-Wert < 5, vorzugsweise < 4 und insbesondere 3 bis 3,5 auf.

Der erfindungsgemäße Beschichtungsstoff ist im Wesentlichen oder völlig frei von organischen Lösemitteln. D. h., dass sein Gehalt an organischen Lösemitteln < 5, vorzugsweise < 3 und bevorzugt < 1 Gew.-% ist. Insbesondere liegt der Gehalt unterhalb der Nachweisgrenzen der üblichen und bekannten qualitativen und quantitativen Nachweismethoden für organische Lösemittel.

Desgleichen ist er im Wesentlichen oder völlig, vorzugsweise völlig, frei von korrosionshemmenden Pigmenten.

Der erfindungsgemäße Beschichtungsstoff enthält mindestens einen Bestandteil (A), vorzugsweise mindestens zwei und insbesondere mindestens drei Bestandteile (A), ausgewählt aus der Gruppe, bestehend aus niedermolekularen, oligomeren und polymeren, organischen Verbindungen, die mindestens eine, insbesondere eine oder mindestens zwei mit aktinischer Strahlung aktivierbare Gruppe(n) enthalten, sowie luft- und oxidativ trocknenden Alkydharzen.

Unter aktinischer Strahlung ist elektromagnetische Strahlung, wie nahes Infrarot (NIR), sichtbares Licht, UV-Strahlung, Röntgenstrahlung oder Gammastrahlung, insbesondere UV-Strahlung, und Korpuskularstrahlung, wie Elektronenstrahlung, Alphastrahlung, Betastrahlung, Protonenstrahlung oder Neutronenstrahlung, insbesondere Elektronenstrahlung, zu verstehen.

Die mit aktinischer Strahlung aktivierbaren Gruppen enthalten mindestens eine, insbesondere eine, mit aktinischer Strahlung aktivierbare Bindung. Hierunter wird eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor- oder Kohlenstoff-Silizium-Einzelbindungen oder - Doppelbindungen oder Kohlenstoff-Kohlenstoff-Dreifach- Bindungen. Von diesen sind die Kohlenstoff-Kohlenstoff-Doppelbindungen und - Dreifachbindungen vorteilhaft und werden deshalb erfindungsgemäß bevorzugt verwendet. Besonders vorteilhaft sind die Kohlenstoff-Kohlenstoff-Doppelbindungen, weswegen sie besonders bevorzugt verwendet werden. Der Kürze halber werden sie im Folgenden als "Doppelbindungen" bezeichnet.

Vorzugsweise sind die Doppelbindungen in Gruppen der allgemeinen Formel I enthalten:

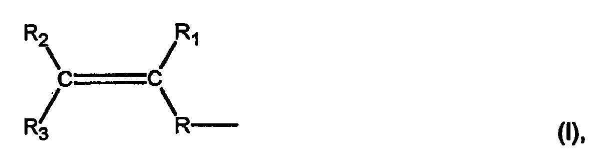

In der allgemeinen Formel I haben die Variablen die folgende Bedeutung:
- R: Kohlenstoff-Kohlenstoff-Einfachbindung zum Kohlenstoffatom einer Carbonyloxygruppe oder zweibindiger organischer Rest, vorzugsweise Kohlenstoff-Kohlenstoff-Einfachbindung; und
- R¹, R² und R³: Wasserstoffatom oder organischer Rest;
wobei mindestens zwei der Reste R, R¹, R² und R³ cyclisch miteinander verknüpft sein können.

Beispiele geeigneter zweibindiger organischer Reste R enthalten Alkylen-, Cycloalkylen- und/oder Arylengruppen oder sie bestehen aus diesen. Gut geeignete Alkylengruppen enthalten ein Kohlenstoffatom oder 2 bis 6 Kohlenstoffatome. Gut geeignete Cycloalkylengruppen enthalten 4 bis 10, insbesondere 6, Kohlenstoffatome. Gut geeignete Arylengruppen enthalten 6 bis 10, insbesondere sechs, Kohlenstoffatome.

Beispiele geeigneter organischer Reste R¹, R² und R³ enthalten Alkyl-, Cycloalkyl- und/oder Arylgruppen oder sie bestehen aus diesen. Gut geeignete Alkylgruppen enthalten ein Kohlenstoffatom oder 2 bis 6 Kohlenstoffatome. Gut geeignete Cycloalkylgruppen enthalten 4 bis 10, insbesondere 6, Kohlenstoffatome. Gut geeignete Arylgruppen enthalten 6 bis 10, insbesondere 6, Kohlenstoffatome.

Die organischen R, R¹, R² und R³ können substituiert oder unsubstituiert sein. Die Substituenten dürfen jedoch nicht die Herstellung des erfindungsgemäßen Beschichtungsstoffs stören und/oder die Aktivierung der Gruppen mit aktinischer Strahlung inhibieren. Vorzugsweise sind die organischen Reste R, R¹, R² und R³ unsubstituiert.

Beispiele für besonders gut geeignete Gruppen der allgemeinen Formel I sind Vinyl-, 1-Methylvinyl-, 1-Ethylvinyl-, Propen-1-yl, Styryl-, Cyclohexenyl-, Endomethylencyclohexyl-, Norbornenyl- und Dicyclopentadienylgruppen, insbesondere Vinylgruppen.

Demnach handelt es sich bei den besonders bevorzugten, mit aktinischer Strahlung aktivierbaren Gruppen um (Meth)Acrylat-, Ethacrylat-, Crotonat-, Cinnamat-, Cyclohexencarboxylat-, Endomethylencyclohexancarboxylat-, Norbornencarboxylat- und Dicyclopentadiencarboxylatgruppen, insbesondere aber (Meth)Acrylatgruppen.

Beispiele gut geeigneter niedermolekularer Verbindungen (A) sind übliche und bekannte Reaktiwerdünner (vgl. Römpp Online, Georg Thieme Verlag, Stuttgart, New York, 2002, »Reaktivverdünner«). Vorzugsweise werden die Reaktiwerdünner aus der Gruppe, bestehend aus Isobornylacrylat, Dicyclopentenyloxyethylacrylat, N-(2-Methacryloyleth-1-yl)ethylenharnstoff, 4-Hydroxybutylacrylat-glycidylether, Ebecryl ® CL1039- oder Genomer ® M 22-Monoacryloylcarbamat, 4-Hydroxybutylacrylat, Hydroxyethylacrylat, Trimethylolpropantriacrylat, Tetrahydrofurfurylmonoacrylat, cyclisches Trimethylolpropanformalmonoacrylat (CTF-Monoacrylat), Dicyclopentadienylacrylat (Fancryl ® FA 512 der Firma Hitachi), CN 131-Epoxypropoxy-monoacrylat der Firma Craynor, Ethylenglykoldiacrylat und Diethylenglykoldiacrylat, ausgewählt.

Oligomere organische Verbindungen (A) enthalten im allgemeinen 2 bis 15 monomere Bausteine; polymere organische Verbindungen (A) enthalten im allgemeinen mehr als 10 monomere Bausteine (vgl. auch Römpp Online, 2002, »Oligomere«, »Polymere«).

Die oligomeren und polymeren organischen Verbindungen (A) können den unterschiedlichsten Oligomer- und Polymerklassen entstammen. Beispiele geeigneter Oligomer- und Polymerklassen sind statistisch, alternierend und/oder blockartig aufgebaute lineare und/oder verzweigte und/oder kammartig aufgebaute Polyadditionsharze, Polykondensationsharze und (Co)Polymerisate von ethylenisch ungesättigten Monomeren. Zu diesen Begriffen wird ergänzend auf Römpp Lexikon Lacke und Druckfarben, Georg Thieme Verlag, Stuttgart, New York, 1998, Seite 457, »Polyaddition« und »Polyadditionsharze (Polyaddukte)«, sowie Seiten 463 und 464, »Polykondensate«, »Polykondensation« und »Polykondensationsharze«, verwiesen.

Beispiele gut geeigneter Polyadditionsharze und/oder Polykondensationsharze (A) sind Polyester, Alkyde, Polyurethane, Polylactone, Polycarbonate, Polyether, Epoxidharz-Amin-Addukte, Polyharnstoffe, Polyamide oder Polyimide.

Beispiele gut geeigneter (Co)Polymerisate (A) sind (Meth)Acrylat(co)polymerisate und Polyvinylester, insbesondere (Meth)Acrylatcopolymerisate. Gut geeignete (Meth)Acrylatcopolymerisate (A) sind beispielsweise die handelsüblichen Produkte Craynor ® PRO 6021 (dendrimeres, acryliertes Oligomer der Firma Craynor), XDE 1025 und 1029 der Firma Bomar Specialties oder die acrylierten Methacrylatcopolymerisate mit einer Doppelbindungsfunktionalität von 2,3 bis 4,6 und einer Glasübergangstemperatur von -23 bis +15°C.

Besonders bevorzugt werden Oligo- und Polyurethane (A) eingesetzt. Diese sind erhältlich aus üblichen und bekannten Diisocyanaten und Polyisocyanaten und Verbindungen, die mindestens eine, insbesondere eine isocyanatreaktive funktionelle Gruppe und mindestens eine, insbesondere eine, der vorstehend beschriebenen, mit aktinischer Strahlung härtbaren Gruppen enthalten.

Als Diisocyanate und Polyisocyanate kommen grundsätzlich alle der üblichen und bekannten, auf dem Lackgebiet verwendeten aliphatischen, cycloaliphatischen, aliphatisch-cycloaliphatischen, aromatischen, aliphatisch-aromatischen und/oder cycloaliphatisch-aromatischen Diisocyanate und Polyisocyanate und Polyisocyanataddukte in Betracht, welche auch als Lackpolyisocyanate bezeichnet werden.

Beispiele geeigneter Beispiele geeigneter Diisocyanate sind Isophorondiisocyanat (= 5-Isocyanato-1-isocyanatomethyl-1,3,3-trimethyl-cyclohexan), 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-(4-isocyanatobut-1-yl)-1,3,3-trimethylcyclohexan, 1-Isocyanato-2-(3-Isocyanatoprop-1-yl)-cyclohexan, 1-Isocyanato-2-(3-isocyanatoeth-1-yl)cyclohexan, 1-Isocyanato-2-(4-isocyanatobut-1-yl)-cyclohexan, 1,2-Diisocyanatocyclobutan, 1,3-Diisocyanatocyclobutan, 1,2-Diisocyanatocyclopentan, 1,3-Diisocyanatocyclopentan, 1,2-Diisocyanatocyclohexan, 1,3-Diisocyanatocyclohexan, 1,4- Diisocyanatocyclohexan. Dicyclohexylmethan-2,4'-diisocyanat, Dicyclohexylmethan-4,4'-diisocyanat, flüssiges Dicyclohexylmethan-4,4'-diisocyanat eines trans/trans-Gehalts von bis zu 30 Gew.-%, vorzugsweise 25 Gew.-% und insbesondere 20 Gew.-%, das durch Phosgenierung von Isomerengemischen des Bis(4-aminocyclohexyl)methans oder durch fraktionierte Kristallisation von handelsüblichem Bis(4-isocyanatocyclohexyl)methan gemäß den Patentschriften DE 44 14 032 A1, GB 1220717 A, DE 16 18 795 A1 oder DE 17 93 785 A1 erhältlich ist; Trimethylendiisocyanat, Tetramethylendiisocyanat, Pentamethylendiisocyanat, Hexamethylendiisocyanat, Ethylethylendiisocyanat, Trimethylhexandiisocyanat, Heptamethylendiisocyanat oder Diisocyanate, abgeleitet von Dimerfettsäuren, wie sie unter der Handelsbezeichnung DDI 1410 von der Firma Henkel vertrieben und in den Patentschriften WO 97/49745 A und WO 97/49747 A beschrieben werden, insbesondere 2-Heptyl-3,4-bis(9-isocyanatononyl)-1-pentyl-cyclohexan, 1,2-, 1,4- oder 1,3-Bis(isocyanatomethyl)cyclohexan, 1,2-, 1,4- oder 1,3-Bis(2-isocyanatoeth-1-yl)cyclohexan, 1,3-Bis(3-isocyanatoprop-1-yl)cyclohexan oder 1,2-, 1,4-oder 1,3-Bis(4-isocyanatobut-1-yl)cyclohexan, m-Tetramethylxylylendiisocyanat (= 1,3-Bis-(2-isocyanatoprop-2-yl)-benzol, Toluylendiisocyanat oder Diphenylmethandiisocyanat.

Beispiele geeigneter Polyisocyanate auf Basis der vorstehend beschriebenen Diisocyanate sind isocyanatgruppenhaltige Polyurethanpräpolymere, die durch Reaktion von Polyolen mit einem Überschuß an mindestens einem der vorstehend beschriebenen Diisocyanate hergestellt worden sind, und/oder Isocyanurat-, Biuret-, Allophanat-, Iminooxadiazindion-, Urethan-, Harnstoff- und/oder Uretdiongruppen enthaltende Polyisocyanate. Bevorzugt werden Polyisocyanate verwendet, die im statistischen Mittel 2 bis 5 Isocyanatgruppen pro Molekül und Viskositäten von 100 bis 10.000, vorzugsweise 100 bis 5000 mPas aufweisen. Außerdem können die Polyisocyanate in üblicher und bekannter Weise hydrophil oder hydrophob modifiziert sein.

Beispiele geeigneter Herstellungsverfahren sind beispielsweise aus dem Patentschriften CA 2,163,591 A, US-A-4,419,513, US 4,454,317 A, EP 0 646 608 A, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A1, US 5,290,902 A1, EP 0 649 806 A1, DE 42 29 183 A1 oder EP 0 531 820 A1 bekannt.

Außerdem kommen die hochviskosen Polyisocyanate, wie sie in der deutschen Patentanmeldung DE 198 28 935 A1 beschrieben werden, in Betracht.

Beispiele geeigneter isocyanatreaktiver funktioneller Gruppen sind Hydroxylgruppen, Thiolgruppen und primäre und sekundäre Aminogruppen, insbesondere Hydroxylgruppen.

Beispiele besonders gut geeigneter Verbindungen, die eine isocyanatreaktive funktionelle Gruppe und eine mit aktinischer Strahlung aktivierbare Gruppe enthalten, sind Monomere, welche mindestens eine Hydroxyl- oder Aminogruppe pro Molekül tragen, wie
- Hydroxyalkylester der Acrylsäure, Methacrylsäure oder einer anderen alpha,beta-olefinisch ungesättigten Carbonsäure, die sich von einem Alkylenglykol ableiten, das mit der Säure verestert ist, oder die durch Umsetzung der alpha,beta-olefinisch ungesättigten Carbonsäure mit einem Alkylenoxid wie Ethylenoxid oder Propylenoxid erhältlich sind, insbesondere Hydroxyalkylester der Acrylsäure, Methacrylsäure, Ethacrylsäure, Crotonsäure, Maleinsäure, Fumarsäure oder Itaconsäure, in denen die Hydroxyalkylgruppe bis zu 20 Kohlenstoffatome enthält, wie 2-Hydroxyethyl-, 2-Hydroxypropyl-, 3-Hydroxypropyl-, 3-Hydroxybutyl-, 4-Hydroxybutylacrylat, -methacrylat, - ethacrylat, -crotonat, -maleinat, -fumarat oder -itaconat oder Methylpropandiolmonoacrylat, -monomethacrylat, -monoethacrylat, - monocrotonat, -monomaleinat, -monofumarat oder -monoitaconat; oder Hydroxycycloalkylester, wie Cyclohexandimethanol-, 1,4-Bis(hydroxymethyl)cyclohexan-, 1,4-Dihydroxycyclohexan- oder Octahydro-4,7- methano-1H-inden-dimethanol-monoacrylat, -monomethacrylat, - monoethacrylat, -monocrotonat, -monomaleinat, -monofumarat oder - monoitaconat; oder die Umsetzungsprodukte all dieser Hydroxyalkyl- oder - cycloalkylester mit cyclischen Estern, wie z.B. epsilon-Caprolacton;
- olefinisch ungesättigte Alkohole wie Allylalkohol;
- Polyole wie Trimethylolpropanmono- oder diallylether oder Pentaerythritmono-, -di- oder -triallylether;
- Umsetzungsprodukte aus Acrylsäure und/oder Methacrylsäure mit dem Glycidylester einer in alpha-Stellung verzweigten Monocarbonsäure mit 5 bis 18 C-Atomen je Molekül, insbesondere einer Versatic®-Säure, oder anstelle des Umsetzungsproduktes eine äquivalenten Menge Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure, umgesetzt wird;
- Aminoethylacrylat, Aminoethylmethacrylat, Allylamin oder N-Methyliminoethylacrylat; und/oder
- Acryloxysilan-enthaltende Vinylmonomere, herstellbar durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure und/oder weiterer hydroxylgruppehaltiger Monomere.

Insbesondere wird 4-Hydroxybutylacrylat verwendet.

Die Umsetzung der Diisocyanate und Polyisocyanate mit den Verbindungen mit mindestens einer isocyanatreaktiven funktionellen Gruppe und mindestens einer mit aktinischer Strahlung aktivierbaren Gruppe bietet keine methodischen Besonderheiten, sondern wird beispielsweise, wie in der internationalen Patentanmeldung WO 96/23836 A beschrieben, durchgeführt.

Gut geeignete acrylierte Oligourethane (A) sind beispielsweise die handelsüblichen Produkte Photomer ® 6623 und 6891 der Firma Cognis, Ebecryl ® 8210 der Firma UCB, Craynor ® 9001 und CN 957 der Firma Craynor sowie Doublemer ® 86A der Firma Double Bond Chemical.

Luft- und oxidativ trocknende Alkydharze (A), wie Leinöl-, Sojaöl-, Safloröl- oder Ricinen-Alkydharze, sind an sich bekannte Verbindungen und werden beispielsweise Römpp Online, 2002, »Alkydharze«, beschrieben. Vorzugsweise werden Alkydharze einer Öllänge oder Ölgehalts von 20 bis 60%, insbesondere 25 bis 60%. 45 bis 65, insbesondere 48 bis 60 Equ.-%, der in den ungesättigten Fettsäureresten des Alkydharzes (A) vorhandenen olefinisch ungesättigten Doppelbindungen sind konjugiert. Wegen seiner Öllänge oder Ölgehalts wird das Alkydharz auch als mittelöliges oder mittelfettes Alkydharz bezeichnet.

Die ungesättigten Fettsäurereste der Alkydharze (A) leiten sich ab von ungesättigten Fettsäuren, wie Lauroleinsäure (Dodecensäure), Myristoleinsäure (Tetradecensäure), Palmitoleinsäure (Hexadecensäure), Ölsäure (Octadecensäure), Gadoleinsäure (Eicosensäure), Erucasäure (Docosensäure), Ricinolsäure (12-Hydroxyoctadecensäure), Linolsäure (Octadecensäure), Linolensäure (Octadecatriensäure), Elaeostearinsäure, Eicosapentensäure oder Docosahexaensäure, die in pflanzlichen und tierischen Ölen, wie Rizinusöl, dehydratisiertes Rizinusöl (Castor Oil), Kokosöl, Palmöl, Erdnussöl, Baumwollöl, Sojabohnenöl, Saffloröl, Sonnenblumenöl, OH-Sonnenblumenöl, Leinöl, erucareiches und erucaarmes Rüböl, Holzöl, Oiticaöl, Schmalz, Talg, Spermöl und Heringsöl, vorkommen bzw. sich hieraus gewinnen lassen.

Die ungesättigten Fettsäuren sind handelsübliche Produkte und werden beispielsweise von der Firma UNIQEMA unter den Marken Prifac ® oder Dedico ®, der Firma Henkel unter der Marke Isomerginsäure ® oder der Firma Akzo unter der Marke Nouracid ® vertrieben.

Der Gehalt an Fettsäureresten (Öllange) und an Fettsäureresten mit konjugierten Doppelbindungen kann vom Fachmann leicht über die Menge an Fettsäuren insgesamt und über das Verhältnis von olefinisch ungesättigten Fettsäuren ohne konjugierte Doppelbindungen zu olefinisch ungesättigten Fettsäuren mit konjugierten Doppelbindungen eingestellt werden.

Bekanntermaßen werden die Alkydharze (A) aus Polyolen und mehrwertigen Carbonsäuren und den vorstehend genannten, oxidativ trocknenden Fettsäuren hergestellt.

Beispiele geeigneter mehrwertiger Alkohole sind Glyzerin, Pentaerythrit, Trimethylolethan und Trimethylolpropan.

Beispiele geeigneter mehrwertiger Carbonsäuren sind Tetra- und Hexahydrophtalsäure, Methylnadic Acid, Methylendomethylen- und 3,6-Endomethylentetrahydrophtalsäure sowie die entsprechenden Anhydride dieser Säuren.

Die Alkydharze (A) können auch mit mindestens einer Modifizierungskomponente, wie Öle, Naturharze, Phenolharze, Acrylatharze, Styrol, Epoxidharze, Siliconharze oder Isocyanate, modifiziert sein.

Die Alkydharze (A) sind handelsübliche Produkte und werden beispielsweise unter der Marke Alkydal ® R 35 von der Firma Bayer AG, Italkyd ® R35 von der Firma Multi Resin vertrieben. Vorzugsweise sind die Alkydharze (A) im vorstehend beschriebenen Sinne lösemittelfrei oder werden beispielsweise durch Destillation von organischen Lösemitteln befreit.

Besonders vorteilhafte erfindungsgemäße Beschichtungsstoffe enthalten die vorstehend beschriebenen Reaktiwerdünner (A), die Oligomeren und Polymeren (A) und die Alkydharze (A).

Ganz besonders vorteilhafte erfindungsgemäße Beschichtungsstoffe enthalten, bezogen auf ihre Gesamtmenge, vorzugsweise
- 5 bis 40 Gew.-%, bevorzugt 10 bis 35 Gew.-% und insbesondere 15 bis 30 Gew.-% mindestens eines Reaktivverdünners (A),
- 5 bis 40 Gew.-%, bevorzugt 10 bis 35 Gew.-% und insbesondere 10 bis 30 Gew.-% mindestens eines Oligomeren und/oder Polymeren (A) und
- 5 bis 40 Gew.-%, bevorzugt 10 bis 35 Gew.-% und insbesondere 10 bis 30 Gew.-% mindestens eines Alkydharzes (A).

Der erfindungsgemäße Beschichtungsstoff enthält als Bestandteil (B) mindestens einen, insbesondere einen, sauren Ester von Polyphosphorsäure und/oder Monophosphorsäure, insbesondere Polyphosphorsäure, und mindestens einer Verbindung (b1), enthaltend mindestens eine, insbesondere eine, Hydroxylgruppe und mindestens eine mit aktinischer Strahlung aktivierbare Gruppe.

Der Gehalt der Polyphosphorsäure an Diphosphorpentoxid kann breit variieren; vorzugsweise liegt er bei 60 bis 95 Gew.-%, bevorzugt 70 bis 95 Gew.-% und insbesondere 70 bis 90 Gew.-%.

Beispiele geeigneter, mit aktinischer Strahlung aktivierbarer Gruppen sind die vorstehend beschriebenen.

Beispiele geeigneter Verbindungen (b1) sind die vorstehend beschriebenen hydroxylgruppenhaltigen, olefinisch ungesättigten Monomere. Insbesondere werden Cyclohexandimethanolmonoacrylat (CDMMA), Tricyclododecandimethanolmonoacrylat (TDDMMA) und 4-Hydroxybutylacrylat eingesetzt.

Vorzugsweise enthalten die Bestandteile (B), bezogen auf ihre Gesamtmenge, 10 bis 25 Gew.-% und insbesondere 15 bis 20 Gew.-% Diphosphorpentoxid.

Besonders vorteilhafte erfindungsgemäße Beschichtungsstoffe enthalten, bezogen auf ihre Gesamtmenge, vorzugsweise 10 bis 50 Gew.-%, bevorzugt 15 bis 45 Gew.-% und insbesondere 20 bis 40 Gew.-% mindestens eines Bestandteils (B).

Der erfindungsgemäße Beschichtungsstoff enthält des Weiteren mindestens eine, insbesondere eine, Art von Nanopartikeln als Bestandteil (C). Bevorzugt werden anorganische Nanopartikel (C) verwendet.

Vorzugsweise werden die Nanopartikel (C) aus der Gruppe, bestehend aus Haupt- und Nebengruppen-Metallen und deren Verbindungen ausgewählt. Bevorzugt werden die Haupt- und Nebengruppen-Metalle aus Metallen der dritten bis fünften Hauptgruppe, der dritten bis sechsten sowie der ersten und zweiten Nebengruppe des Periodensystems der Elemente sowie den Lanthaniden ausgewählt. Besonders bevorzugt werden Bor, Aluminium, Gallium, Silizium, Germanium, Zinn, Arsen, Antimon, Silber, Zink, Titan, Zirkonium, Hafnium, Vanadium, Niob, Tantal, Molybdän, Wolfram und Cer, insbesondere Aluminium, Silizium, Silber, Cer, Titan und Zirkonium eingesetzt.

Vorzugsweise handelt es sich bei den Verbindungen der Metalle um die Oxide, Oxidhydrate, Sulfate oder Phosphate.

Bevorzugt werden Silber, Siliziumdioxid, Aluminiumoxid, Aluminiumoxidhydrat, Titandioxid, Zirkoniumoxid, Ceroxid und Mischungen hiervon, besonders bevorzugt Silber, Ceroxid, Siliziumdioxid, Aluminiumoxidhydrat und Mischungen hiervon, ganz besonders bevorzugt Siliziumdioxid, insbesondere pyrogenes Siliziumdioxid, verwendet.

Vorzugsweise weisen die Nanopartikel (C) eine Primärpartikelgröße < 50 nm, bevorzugt 5 bis 50 nm, insbesondere 10 bis 30 nm, auf.

Die Nanopartikel (C) können in fester Form oder vorzugsweise als Suspension in einem der vorstehend beschriebenen, insbesondere monofunktionellen, Reaktivverdünner (A) eingesetzt werden. Dabei sind die Reaktivverdünner (A) in die Zusammensetzung des erfindungsgemäßen Beschichtungsstoffs mit einzubeziehen.

Vorzugsweise liegt der Gehalt des erfindungsgemäßen Beschichtungsstoffs an den Nanopartikeln (C) bei 1 bis 25 Gew.-%, bevorzugt 2 bis 20 Gew.-% und insbesondere 3 bis 15 Gew.-%, jeweils bezogen auf den Beschichtungsstoffs.

Darüber hinaus kann der erfindungsgemäße Beschichtungsstoff noch mindestens einen Zusatzstoff (D), insbesondere mindestens zwei Zusatzstoffe (D), in wirksamen Mengen enthalten.

Vorzugsweise wird der Zusatzstoff (D) aus der Gruppe, bestehend aus epoxidgruppenhaltigen Verbindungen, Polyphosphorsäuren, Trockenstoffen, nicht deckenden, organischen und anorganischen, farbigen und unbunten, optisch effektgebenden, elektrisch leitfähigen, magnetisch abschirmenden und fluoreszierenden Pigmenten, Antiabsetzmitteln, von den Bestandteilen (A) verschiedenen, oligomeren und polymeren Bindemitteln, UV-Absorbern, Lichtschutzmitteln, Radikalfängern, Photoinitiatoren, Entlüftungsmitteln, Slipadditiven, Polymerisationsinhibitoren, Entschäumern, Emulgatoren und Netzmitteln, Haftvermittlern, Verlaufmitteln, Filmbildehilfsmitteln, rheologiesteuernden Additiven und Flammschutzmitteln, insbesondere epoxidgruppenhaltigen Verbindungen und Photoinitiatoren; ausgewählt.

Beispiele geeigneter Photoinitiatoren (D) sind aus Römpp Online, Georg Thieme Verlag, Stuttgart, New York, 2002, »Photoinitiatoren« bekannt.

Beispiele geeigneter epoxidgruppenhaltiger Verbindungen (D) sind aromatische, epoxidgruppenhaltige Verbindungen, insbesondere Bisphenol-A-, Bisphenol-F-, hydrierter Bisphenol-A-, hydrierter Bisphenol-F-, und Tricyclododecandimethanol-diglycidylether. Die aromatischen, epoxidgruppenhaltigen Verbindungen (D) können zusammen mit geringen Mengen, d. h. in Mengen < 20 Gew.-%, bezogen auf die epoxidgruppenhaltigen Verbindungen (D), an niedermolekularen, aliphatischen, epoxidgruppenhaltigen Verbindungen (D) verwendet werden.

Vorzugsweise sind die epoxidgruppenhaltigen Verbindungen (D) in dem erfindungsgemäßen Beschichtungsstoff in einer Menge von 1 bis 20 Gew.-%, bevorzugt 5 bis 17 Gew.-% und insbesondere 5 bis 15 Gew.-%, jeweils bezogen auf den Beschichtungsstoff, enthalten.

Vorzugsweise enthält der erfindungsgemäße Beschichtungsstoff, bezogen auf seine Gesamtmenge, 1 bis 10, bevorzugt 1,5 bis 8 insbesondere 2 bis 6 Gew.-% an organisch gebundenem Diphosphorpentoxid.

Die Herstellung des erfindungsgemäßen Beschichtungsstoffs erfolgt vorzugsweise durch Vermischen der vorstehend beschriebenen Bestandteile in geeigneten Mischaggregaten wie Rührkessel, Rührwerksmühlen, Extruder, Kneter, Ultraturrax, Inline-Dissolver, statische Mischer, Mikromischer, Zahnkranzdispergatoren, Druckentspannungsdüsen und/oder Microfluidizer. Vorzugsweise wird hierbei unter Ausschluss von Licht einer Wellenlänge λ < 550 nm oder unter völligem Ausschluss von Licht gearbeitet, um eine vorzeitige Vernetzung zu verhindern.

Die erfindungsgemäßen Beschichtungsstoffe sind Einkomponentensysteme und hervorragend für die Herstellung von Beschichtungen aller Art geeignet.

Insbesondere sind sie als Coil-Coating-Lacke sowie als Kitte für die Herstellung von korrosionshemmenden Beschichtungen für Stahlkanten und als korrosionshemmende Beschichtungen für Schweißnähte geeignet. Außerdem eignen sie sich hervorragend für die Herstellung von korrosionshemmenden Beschichtungen auf allen Gebrauchsmetallen, insbesondere auf blankem Stahl, galvanisiertem, elektroverzinktem und phosphatiertem Stahl, Zink und Aluminium, auf Beschichtungen, insbesondere Primerlackierungen, und auf SMC (Sheet Moulded Compounds) und BMC (Bulk Moulded Compounds).

Die erfindungsgemäßen Beschichtungen sind dabei hervorragend als Kiartackieruhgen, Decklackierungen, temporäre oder permanente Schutzschichten, Primerlackierungen, Versiegelungen und Antifingerabdruck-Lackierungen, insbesondere aber als Primerlackierungen, geeignet.

Methodisch weist die Applikation der erfindungsgemäßen Beschichtungsstoffe, keine Besonderheiten auf, sondern kann durch alle üblichen Applikationsmethoden, wie z.B. Spritzen, Rakeln, Streichen, Gießen, Tauchen, Träufeln oder Walzen erfolgen. Generell empfiehlt es sich, unter Ausschluss von aktinischer Strahlung zu arbeiten, um eine vorzeitige Vernetzung der erfindungsgemäßen Beschichtungsstoffe zu vermeiden. Nach der Applikation kann das in dem erfindungsgemäßen Beschichtungsstoff gegebenenfalls enthaltene Wasser in einfacher Weise verdampft werden, was auch als flash-off bezeichnet wird. Vorzugsweise geschieht dies durch die kurzzeitige induktive Aufheizung der Metallsubstrate.

Für die Härtung der applizierten erfindungsgemäßen Beschichtungsstoffe mit aktinischer Strahlung kommen Strahlenquellen wie Quecksilberhoch- oder - niederdruckdampflampen oder Elektronenstrahlquellen in Betracht. Weitere Beispiele geeigneter Verfahren und Vorrichtungen zur Härtung mit aktinischer Strahlung werden in der deutschen Patentanmeldung DE 198 18 735 A1, Spalte 10, Zeile 31 bis Spalte 11, Zeile 22, von R. Stephen Davidson in »Exploring the Science, Technology and Applications of U.V. and E.B. Curing«, Sita Technology Ltd., London, 1999, Chapter I, »An Overview«, Seite 16, Figure 10, oder von Dipl.-Ing. Peter Klamann in »eltosch System-Kompetenz, UV-Technik, Leitfaden für Anwender«, Seite 2, Oktober 1998, beschrieben.

Vorzugsweise wird bei der Bestrahlung eine Strahlendosis von 100 bis 6.000, vorzugsweise 200 bis 3.000, bevorzugt 300 bis 2.500 und besonders bevorzugt 500 bis 2.000 mJcm⁻² eingesetzt.

Dabei kann die Strahlenintensität breit variieren. Sie richtet sich insbesondere nach der Strahlendosis einerseits und der Bestrahlungsdauer andererseits. Die Bestrahlungsdauer richtet sich bei einer vorgegebenen Strahlendosis nach der Band- oder Vorschubgeschwindigkeit der Substrate in der Bestrahlungsanlage und umgekehrt. Vorzugsweise liegt die Strahlenintensität bei 1x10° bis 3x10⁵, bevorzugt 2x10° bis 2x10⁵, besonders bevorzugt 3x10° bis 2,5x10⁵ und insbesondere 5x10° bis 2x10⁵ Wm⁻².

Es ist ein besonderer Vorteil des erfindungsgemäßen Beschichtungsstoffs, dass die Strahlenhärtung durch die oxidative Härtung an der Luft unterstützt werden kann. Es ist noch ein weiterer besonderer Vorteil des erfindungsgemäßen Beschichtungsstoffs, dass er auch nur partiell gehärtet und in diesem Zustand mit mindestens einem weiteren, insbesondere mit einem mit aktinischer Strahlung härtbaren Beschichtungsstoff, überlackiert werden kann, wonach man alle applizierten Schichten gemeinsam mit aktinischer Strahlung härtet. Hierdurch werden die Prozesszeiten weiter verkürzt, und die Zwischenschichthaftung wird weiter verbessert. Insgesamt ist es aufgrund der Verwendung des erfindungsgemäßen Beschichtungsstoffs nicht mehr notwendig, beim Coil-Coating-Verfahren die Metallfolien auf PMT von 240 °C und mehr zu erhitzen. Es erübrigt sich auch das Absaugen und Entsorgen flüchtiger organischer Verbindungen, sodass der apparative, sicherheitstechnische und energetische Aufwand signifikant reduziert werden kann.

Die resultierenden erfindungsgemäßen Beschichtungen sind hochflexibel, ohne Beschädigung sehr stark verformbar, chemikalienbeständig, witterungsbeständig, schwitzwasser- und salzwasserbeständig sowie von hoher Haftung zu den Substraten und anderen Beschichtungen. Bei alledem vermitteln sie noch einen hervorragenden optischen Eindruck.

### Beispiele

### Beispiel 1

### Die Herstellung eines mit aktinischer Strahlung härbaren Beschichtungsstoffs

Der Beschichtungsstoff wurde durch Vermischen von 20 Gewichtsteilen eines Alkydharzes (75-Gew.-%-ig in Isobornylacrylat) einer Öllänge von 28%, eines massenmittleren Molekulargewichts von 10.000 bis 12.000 Dalton und einer Uneinheitlichkeit des Molekulargewichts < 5 auf Basis von Hexahydrophtalsäure und modifiziertem Sonnenblumenöl FA mit einem Anteil an konjugierten Doppelbindungen von 48 bis 62 Equ.-%, bezogen auf die Anzahl der vorhandenen Doppelbindungen (Edenor ® 6010 der Firma Henkel), 30 Gewichtsteilen eines Polyphosphorsäureesters von Cyclohexandimethanolmonoacrylat (CDMMA) (hergestellt durch die Umsetzung von 80 Gewichtsteilen CDMMA und 20 Gewichtsteilen Polyphosphorsäure eines Gehalts an Diphosphorpentoxid von 84 Gew.-%), 20 Gewichtsteilen eines handelsüblichen, oligomeren Urethanacrylats (Photomer ® 6623 der Firma Cognis), 10 Gewichtsteilen 4-Hydroxybutylacrylat-glycidylether, 22 Gewichtsteilen einer 50-Gew.-%-igen Suspension von Siliziumdioxid-Nanopartikeln in CTF-Monoacrylat der Firma BASF AG (Nanocryl ® XP 21-765 der Firma Hanse Chemie) und 4 Gewichtsteilen eines handelsüblichen Photoinitiators (Irgacure ® 184 der Firma Ciba Specialty Chemicals) und Homogenisieren der resultierenden Mischung in einem Ultraturrax während 20 Minuten bei einer Drehzahl von 1.800 hergestellt.

Der Beschichtungsstoff wies organisch gebundenes Diphosphorpentoxid in einer Menge von 4,8 Gew.-%, bezogen auf den Beschichtungsstoff auf. Der Beschichtungsstoff war unter Ausschluss von aktinischer Strahlung völlig lagerstabil. Er war hervorragend für die Herstellung von Primerlackierungen geeignet.

### Beispiele 2 bis 3

### Die Herstellung von Beschichtungen mit Hilfe des Beschichtungsstoffs gemäß Beispiel 1

### Beispiel 2:

Als Substrate wurden entfettete, nicht vorbehandelte Stahlbleche aus EZ-Stahl (Elektrozinkstahl) und HDG (hot dipped galvanized)-Stahl der Firma Chemetall verwendet. Der Beschichtungsstoff wurde auf die Substrate mit Rakel S3 in einer Schichtdicke von 3 µm aufgetragen. Die resultierenden Schichten wurden mit UV-Strahlung einer Dosis von 500 mJcm⁻² gehärtet.

Nach einer Alterung von 12 h widerstanden die resultierenden Beschichtungen bereits 100 Doppelhübe mit einem mit Methylethylketon getränkten Wattebausch.

Die Beschichtungen wurden angeritzt und dem Salzsprühtest unterzogen. Die betreffenden Probetafeln zeigten nach 168 h keine schwerwiegenden nachteiligen Veränderungen wie Delamination oder Weißkorrosion; es waren lediglich eine Unterwanderung am Ritz von 2 mm und eine Unterwanderung an der Kante von 1 mm zu beobachten. Sie konnten daher als i.O. (in Ordnung) benotet werden.

Die Beschichtungen wurden außerdem mit einem üblichen und bekannten Coil-Coating-Lack auf der Basis Polyester/Melaminharz der Firma BASF Coatings AG überschichtet. Die resultierenden Lackschichten wurden während 35 Sekunden bei 240°C PMT gehärtet. Die resultierenden Beschichtungen konnten problemlos sehr stark verformt werden (T-Bend-Test: EZ-Substrate: 1; HDG-Substrate: 1,5) und wiesen eine hervorragende Substrat- und Zwischenschichthaftung (Tape-Test: EZ-Substrate: 0,5; HDG-Substrate: 0,5 bis 1) und eine hohe Korrosionsschutzwirkung auf (Salzsprühtest 21 Tage: Alle Substrate: Unterwanderung am Ritz < 2mm; Unterwanderung an der Kante 0 bis 1 mm, Note i.O.).

### Beispiel 3:

Als Substrate wurden Stahlbleche aus CRS (cold rolled steal), PVD (phase vapor depositon)-beschichter CRS und HDG-Stahl verwendet.

Der Beschichtungsstoff des Beispiels 1 wurde auf die Substrate mit Rakel S14, S20 und S32 in Schichtdicken von 14 µm, 20 µm und 32 µm appliziert. Die resultierenden Schichten wurden mit UV-Strahlung einer Dosis von 1.500 mJcm⁻² gehärtet.

Bereits die angeritzten 14 µm dicken Beschichtungen auf HDG-Stahl überstanden 21 Tage Salzsprühtest ohne Weißkorrosion. Die nicht angeritzten Beschichtungen blieben klar und unverändert. Überraschenderweise erfüllten die Beschichtungen die Anforderungen der Klasse IV der Spezifikation der Firma Usinor für Bauteile für die Außenanwendung ohne Vorbehandlung der Substrate, ohne korrosionshemmende Pigmente und ohne thermische Nachhärtung.

Bereits die angeritzten 20 µm dicken Beschichtungen auf CRS und PVD-CRS überstanden 21 Tage Salzsprühtest ohne Weißkorrosion; die Unterwanderungen lagen am Ritz lag bei 5 mm und an der Kante bei 0 bis 3 mm. Die nicht angeritzten 20 µm dicken Beschichtungen veränderten sich während des Salzsprühtests nicht. Bei den angeritzten 32 µm dicken Beschichtungen lag die Unterwanderung am Ritz bei 5 mm und an der Kante bei 0 bis 1 mm.

Insgesamt ergab sich der überraschende Befund, dass die nicht angeritzten Beschichtungen einen sehr guten Korrosionsschutz ohne eine Verzinkung und ohne eine Vorbehandlung boten.

### Beispiel 3:

Wie in Beispiel 2 beschrieben, wurden mit dem Beschichtungsstoffs des Beispiels 1 4 bis 6 µm dicke Beschichtungen auf PVD-CRS, HDG- und EZ-Stahl sowie auf Galvalume ® ( Legierung aus Zink und Aluminium) erzeugt. Die Beschichtungen waren hoch glänzend (> 80 Einheiten) und verstärkten den metallischen optischen Eindruck. Insbesondere ergaben die Beschichtungen auf Galvalume ® und PVD-CRS einen besonders schönen dekorativen Effekt. Die Beschichtungen waren hochkratzfest. Sie waren beständig gegenüber Stahlwolle. Nach 1.000 Cyclen im Abriebfestigkeitstest (zwei Gummiabrasivrollen CS 10 mit Edelstein-Abrasivpulver oder Aluminiumoxid; Auflagegewicht: 1.000 g pro Arm) erlitten sie nur einen Gewichtsverlust von jeweils 3 mg. Unter den Bedingungen der üblichen und bekannten Kratztests, wie der Waschstraßentest nach AMTEC oder der Bürstentest, wurden sie nicht zerkratzt. Sie konnten leicht eingefärbt und für dekorative Bauteile im Innenbereich eingesetzt werden.

### Beispiel 4

### Die Herstellung eines epoxidgruppenhaltigen, mit aktinischer Strahlung härtbaren Beschichtungsstoffs

Zu dem Beschichtungsstoff gemäß Beispiel 1 wurden 10 Gewichtsteile hydrierter Bisphenol-A-diglycidylether hinzu gegeben, und die resultierende Mischung wurde homogenisiert.

Der Beschichtungsstoff wies unter Ausschluss von aktinischer Strahlung eine Verarbeitungszeit von 20 Stunden auf. Er war hervorragend für die Herstellung von Primerlackierungen geeignet.

### Beispiel 5

### Die Herstellung von Beschichtungen mit Hilfe des Beschichtungsstoffsgemäß Beispiel 4

Als Substrate wurden entfettete, nicht vorbehandelte Stahlbleche aus EZ-Stahl und HDG-Stahl der Firma Chemetall verwendet. Der Beschichtungsstoff wurde auf die Substrate mit Rakel S3 in einer Schichtdicke von 3 µm aufgetragen. Die resultierenden Schichten wurden mit UV-Strahlung einer Dosis von 500 mJcm⁻² gehärtet.

Die resultierenden Beschichtungen wiesen selbst bei dieser geringen Schichtdicke eine hohe Korrosionsschutzwirkung auf (Salzsprühtest: selbst nach 7 Tagen keine Weißkorrosion) und waren bereits ohne Nachtempern hoch elastisch (T-Bend-Test: 2).

## Patentansprüche

1. Mit aktinischer Strahlung härtbarer, von korrosionshemmenden Pigmenten und von organischen Lösemitteln im Wesentlichen oder völlig freier, flüssiger Beschichtungsstoff, enthaltend
(A) mindestens einen Bestandteil, ausgewählt aus der Gruppe bestehend aus niedermolekularen, oligomeren und polymeren organischen Verbindungen, die mindestens eine mit aktinischer Strahlung aktivierbare Gruppe enthalten, sowie luft- und oxidativ trocknenden Alkydharzen,
(B) mindestens einen Bestandteil, ausgewählt aus der Gruppe, bestehend aus sauren Estern von Polyphosphorsäure und von Monophosphorsäure mit mindestens einer Verbindung (b1), enthaltend mindestens eine Hydroxylgruppe und mindestens eine mit aktinischer Strahlung aktivierbare Gruppe, und
(C) mindestens eine Art von Nanopartikeln.

2. Beschichtungsstoff nach Anspruch 1, **dadurch gekennzeichnet, dass** er, bezogen auf seine Gesamtmenge, 1 bis 10 Gew.-% an organisch gebundenen Diphosphorpentoxid enthält.

3. Beschichtungsstoff nach Anspruch 1 oder 2, **dadurch gekennzeichnet, dass** die niedermolekularen organischen Verbindungen (A) Reaktiwerdünner sind.

4. Beschichtungsstoff nach einem der Ansprüche 1 bis 3, **dadurch gekennzeichnet, dass** die oligomeren oder polymeren Verbindungen (A) Oligo- oder Polyurethane sind.

5. Beschichtungsstoff nach einem der Ansprüche 1 bis 4, **dadurch gekennzeichnet, dass** das luft- und oxidativ trocknende Alkydharz (A) eine Öllänge von 20 bis 60%, bezogen auf das Alkydharz (A), hat, wobei 45 bis 65 Equ.-% der in den ungesättigten Fettsäureresten vorhandenen olefinisch ungesättigten Doppelbindungen konjugiert sind.

6. Beschichtungsstoff nach einem der Ansprüche 1 bis 5, **dadurch gekennzeichnet, dass** die mit aktinischer Strahlung aktivierbare Gruppe mindestens eine mit aktinischer Strahlung aktivierbare Bindung enthält.

7. Beschichtungsstoff nach Anspruch 6, **dadurch gekennzeichnet, dass** die aktinische Strahlung elektromagnetische Strahlung oder Korpuskularstrahlung ist.

8. Beschichtungsstoff nach Anspruch 7, **dadurch gekennzeichnet, dass** die elektromagnetische Strahlung nahes Infrarot (NIR), sichtbares Licht, UV-Strahlung, Röntgenstrahlung und Gammastrahlung und die Korpuskularstrahlung Elektronenstrahlung, Protonenstrahlung, Alphastrahlung, Betastrahlung und Neutronenstrahlung umfasst.

9. Beschichtungsstoff nach einem der Ansprüche 1 bis 8, **dadurch gekennzeichnet, dass** die mit aktinischer Strahlung aktivierbare Bindung eine Kohlenstoff-Kohlenstoff-Doppelbindung und/oder -Dreifachbindung ist.

10. Beschichtungsstoff nach Anspruch 9, **dadurch gekennzeichnet, dass** die mit aktinischer Strahlung aktivierbare Bindung eine Kohlenstoff-Kohlenstoff Doppelbindung ist.

11. Beschichtungsstoff nach einem der Ansprüche 1 bis 10, **dadurch gekennzeichnet, dass** die mit aktinischer Strahlung aktivierbare Gruppe eine (Meth)Acrylatgruppe ist.

12. Beschichtungsstoff nach einem der Ansprüche 1 bis 11, **dadurch gekennzeichnet, dass** die Verbindungen (b1) aus der Gruppe, bestehend aus Cyclohexandimethanolmonoacrylat (CDMMA), Tricyclododecandimethanolmonoacrylat (TDDMMA) und 4-Hydroxybutylacrylat, ausgewählt sind.

13. Beschichtungsstoff nach einem der Ansprüche 1 bis 12, **dadurch gekennzeichnet, dass** die Nanopartikel (C) aus der Gruppe, bestehend aus Siliziumdioxid und Aluminiumoxid ausgewählt sind.

14. Beschichtungsstoff nach einem der Ansprüche 1 bis 13, **dadurch gekennzeichnet, dass** er, bezogen auf seine Gesamtmenge,
- 5 bis 40 Gew.-%, bevorzugt 10 bis 35 Gew.-% und insbesondere 15 bis 30 Gew.-% mindestens eines Reaktiwerdünners (A),
- 5 bis 40 Gew.-%, bevorzugt 10 bis 35 Gew.-% und insbesondere 10 bis 30 Gew.-% mindestens eines Oligomeren und/oder Polymeren (A) und
- 5 bis 40 Gew.-%, bevorzugt 10 bis 35 Gew.-% und insbesondere 10 bis 30 Gew.-% mindestens eines Alkydharzes (A)
enthält.

15. Beschichtungsstoff nach einem der Ansprüche 1 bis 14, **dadurch gekennzeichnet, dass** er, bezogen auf seine Gesamtmenge, den Bestandteil (B) in einer Menge von 10 bis 50 Gew.-%, bevorzugt 15 bis 45 Gew.-% und insbesondere 20 bis 40-Gew.-% enthält.

16. Beschichtungsstoff nach einem der Ansprüche 1 bis 15, **dadurch gekennzeichnet, dass** er, bezogen auf seine Gesamtmenge, die Nanopartikel (C) in einer Menge von 1 bis 25 Gew.-%, bevorzugt 2 bis 20 Gew.-% und insbesondere 3 bis 15 Gew.-% enthält.

17. Beschichtungsstoff nach einem der Ansprüche 1 bis 16, **dadurch gekennzeichnet, dass** er mindestens einen Zusatzstoff (D) enthält.

18. Beschichtungsstoff nach Anspruch 17, **dadurch gekennzeichnet, dass** der Zusatzstoff (D) aus der Gruppe, bestehend aus epoxidgruppenhaltigen Verbindungen, Polyphosphorsäuren, Trockenstoffen, nicht deckenden, organischen und anorganischen, farbigen und unbunten, optisch effektgebenden, elektrisch leitfähigen, magnetisch abschirmenden und fluoreszierenden Pigmenten, Antiabsetzmitteln, von den Bestandteilen (A) verschiedenen, oligomeren und polymeren Bindemitteln, UV-Absorbern, Lichtschutzmitteln, Radikalfängern, Photoinitiatoren, Entlüftungsmitteln, Slipadditiven, Polymerisationsinhibitoren, Entschäumern, Emulgatoren und Netzmitteln, Haftvermittlern, Verlaufmitteln, Filmbildehilfsmitteln, rheologiesteuernden Additiven und Flammschutzmitteln, insbesondere epoxidgruppenhaltigen Verbindungen und Photoinitiatoren, ausgewählt sind.

19. Beschichtungsstoff nach Anspruch 18, **dadurch gekennzeichnet**, die epoxidgruppenhaltigen Verbindungen (D) aromatische, epoxidgruppenhaltige Verbindungen sind.

20. Beschichtungsstoff nach Anspruch 19, **dadurch gekennzeichnet**, die aromatischen, epoxidgruppenhaltigen Verbindungen (D) aus der Gruppe, bestehend aus Bisphenol-A-, Bisphenol-F-, hydriertem Bisphenol-A-, hydriertem Bisphenol-F-, und Tricyclododecandimethanol-diglycidylether, ausgewählt sind.

21. Beschichtungsstoff nach einem der Ansprüche 17 bis 20, **dadurch gekennzeichnet, dass** er, bezogen auf seine Gesamtmenge, die epoxidgruppenhaltigen Verbindungen (D) in einer Menge von 1 bis 20 Gew.-%, bevorzugt 5 bis 17 Gew.-% und insbesondere 5 bis 15 Gew.-% enthält.

22. Verfahren zur Herstellung des Beschichtungsstoffs gemäß einem der Ansprüche 1 bis 21, **dadurch gekennzeichnet, dass** man zumindest die Bestandteile (A), (B) und (C) miteinander vermischt und die resultierende Mischung homogenisiert.

23. Verwendung des Beschichtungsstoffs gemäß einem der Ansprüche 1 bis 21 und des mit Hilfe des Verfahrens gemäß Anspruch 22 hergestellten Beschichtungsstoffs zur Herstellung von Coil- Coatings.

24. Verwendung nach Anspruch 23, **dadurch gekennzeichnet, dass** die Coil-Coatings haftfeste, korrosionshemmende Primerschichten sind.

## Claims

1. Liquid coating material which is curable with actinic radiation and is substantially or completely free from organic solvents and from corrosion-inhibiting pigments, comprising
(A) at least one constituent selected from the group consisting of low molecular mass, oligomeric, and polymeric organic compounds which contain at least one group which can be activated with actinic radiation, and also air-drying and oxidatively drying alkyd resins,
(B) at least one constituent selected from the group consisting of acidic esters of polyphosphoric acid and of monophosphoric acid with at least one compound (b1) containing at least one hydroxyl group and at least one group which can be activated with actinic radiation, and
(C) at least one kind of nanoparticles.

2. Coating material according to Claim 1, **characterized in that** it contains, based on its total amount, 1 to 10% by weight of organically bonded diphosphorus pentoxide.

3. Coating material according to Claim 1 or 2, **characterized in that** the low molecular mass organic compounds (A) are reactive diluents.

4. Coating material according to any of Claims 1 to 3, **characterized in that** the oligomeric or polymeric compounds (A) are oligourethanes or polyurethanes.

5. Coating material according to any of Claims 1 to 4, **characterized in that** the air-drying and oxidatively drying alkyd resin (A) has an oil length of 20 to 60%, based on the alkyd resin (A), 45 to 65 eq.% of the olefinically unsaturated double bonds present in the unsaturated fatty acid residues being conjugated.

6. Coating material according to any of Claims 1 to 5, **characterized in that** the group which can be activated with actinic radiation contains at least one bond which can be activated with actinic radiation.

7. Coating material according to Claim 6, **characterized in that** the actinic radiation is electromagnetic radiation or corpuscular radiation.

8. Coating material according to Claim 7, **characterized in that** the electromagnetic radiation embraces near infrared (NIR), visible light, UV radiation, X-rays, and gamma radiation and the corpuscular radiation embraces electron beams, proton beams, alpha radiation, beta radiation, and neutron beams.

9. Coating material according to any of Claims 1 to 8, **characterized in that** the bond which can be activated with actinic radiation is a carbon-carbon double bond and/or triple bond.

10. Coating material according to Claim 9, **characterized in that** the bond which can be activated with actinic radiation is a carbon-carbon double bond.

11. Coating material according to any of Claims 1 to 10, **characterized in that** the group which can be activated with actinic radiation is a (meth)acrylate group.

12. Coating material according to any of Claims 1 to 11, **characterized in that** the compounds (b1) are selected from the group consisting of cyclohexanedimethanol monoacrylate (CDMMA), tricyclododecanedimethanol monoacrylate (TDDMMA), and 4-hydroxybutyl acrylate.

13. Coating material according to any of Claims 1 to 12, **characterized in that** the nanoparticles (C) are selected from the group consisting of silicon dioxide and aluminum oxide.

14. Coating material according to any of Claims 1 to 13, **characterized in that** it contains, based on its total amount,
- 5 to 40%, preferably 10 to 35%, and in particular 15 to 30% by weight of at least one reactive diluent (A),
- 5 to 40%, preferably 10 to 35%, and in particular 10 to 30% by weight of at least one oligomer and/or polymer (A), and
- 5 to 40%, preferably 10 to 35%, and in particular 10 to 30% by weight of at least one alkyd resin (A).

15. Coating material according to any of Claims 1 to 14, **characterized in that** it contains, based on its total amount, constituent (B) in an amount of 10 to 50% by weight, preferably 15 to 45% by weight, and in particular 20 to 40% by weight.

16. Coating material according to any of Claims 1 to 15, **characterized in that** it contains, based on its total amount, nanoparticles (C) in an amount of 1 to 25% by weight, preferably 2 to 20% by weight, and in particular 3 to 15% by weight.

17. Coating material according to any of Claims 1 to 16, **characterized in that** it contains at least one additive (D).

18. Coating material according to Claim 17, **characterized in that** the additive (D) is selected from the group consisting of epoxide compounds, polyphosphoric acids, dryers, nonopaque organic and inorganic, colored and achromatic, optical effect, electrically conductive, magnetically shielding, and fluorescent pigments, antisettling agents, oligomeric and polymeric binders other than the constituents (A), UV absorbers, light stabilizers, free-radical scavengers, photoinitiators, devolatilizers, slip additives, polymerization inhibitors, defoamers, emulsifiers and wetting agents, adhesion promoters, leveling agents, film formation auxiliaries, rheology control additives, and flame retardants, especially epoxide compounds and photoinitiators.

19. Coating material according to Claim 18, **characterized in that** the epoxide compounds (D) are aromatic epoxide compounds.

20. Coating material according to Claim 19, **characterized in that** the aromatic epoxide compounds (D) are selected from the group consisting of bisphenol A diglycidyl ether, bisphenol F diglycidyl ether, hydrogenated bisphenol A diglycidyl ether, hydrogenated bisphenol F diglycidyl ether, and tricyclododecanedimethanol diglycidyl ether.

21. Coating material according to any of Claims 17 to 20, **characterized in that** it contains, based on its total amount, the epoxide compounds (D) in an amount of 1 to 20% by weight, preferably 5 to 17% by weight, and in particular 5 to 15% by weight.

22. Process for preparing the coating material according to any of Claims 1 to 21, **characterized in that** at least constituents (A), (B), and (C) are mixed with one another and the resulting mixture is homogenized.

23. Use of the coating material according to any of Claims 1 to 21 and of the coating material prepared by means of the process according to Claim 22 to produce coil coatings.

24. Use according to Claim 23, **characterized in that** the coil coatings are firmly adhering corrosion-inhibiting primer coats.

## Revendications

1. Matière de revêtement, liquide, durcissable par un rayonnement actinique, pratiquement ou totalement exempte de solvants organiques et de pigments anticorrosion, contenant
(A) au moins un composant choisi dans le groupe constitué par des composés organiques de faible masse moléculaire, oligomères et polymères, qui contiennent au moins un groupe activable par un rayonnement actinique, ainsi que des résines alkyde séchant à l'air et par oxydation,
(B) au moins un composant choisi dans le groupe constitué par des esters acides d'acide polyphosphorique et d'acide monophosphorique avec au moins un composé (b1) contenant au moins un groupe hydroxy et au moins un groupe activable par un rayonnement actinique, et
(C) au moins un type de nanoparticules.

2. Matière de revêtement selon la revendication 1, **caractérisée en ce qu'**elle contient, par rapport à sa quantité totale, de 1 à 10 % en poids de pentoxyde de diphosphore en liaison organique.

3. Matière de revêtement selon la revendication 1 ou 2, **caractérisée en ce que** les composés organiques (A) de faible masse moléculaire sont des diluants réactifs.

4. Matière de revêtement selon l'une quelconque des revendications 1 à 3, **caractérisée en ce que** les composés oligomères ou polymères (A) sont des oligo- ou polyuréthannes.

5. Matière de revêtement selon l'une quelconque des revendications 1 à 4, **caractérisée en ce que** la résine alkyde (A) séchant à l'air et par oxydation a une teneur en huile de 20 à 60 %, par rapport à la résine alkyde (A), 45 à 65 Eq % des doubles liaisons à insaturation oléfinique présentes dans les restes d'acides gras insaturés étant conjuguées.

6. Matière de revêtement selon l'une quelconque des revendications 1 à 5, **caractérisée en ce que** le groupe activable par un rayonnement actinique comporte au moins une liaison activable par un rayonnement actinique.

7. Matière de revêtement selon la revendication 6, **caractérisée en ce que** le rayonnement actinique est un rayonnement électromagnétique ou un rayonnement corpusculaire.

8. Matière de revêtement selon la revendication 7, **caractérisée en ce que** le rayonnement électromagnétique comprend l'infrarouge proche (NIR), la lumière visible, le rayonnement UV, le rayonnement X et le rayonnement gamma, et le rayonnement corpusculaire comprend un faisceau d'électrons, un faisceau de protons, le rayonnement alpha, le rayonnement bêta et un faisceau de neutrons.

9. Matière de revêtement selon l'une quelconque des revendications 1 à 8, **caractérisée en ce que** la liaison activable par un rayonnement actinique est une double liaison carbone-carbone et/ou une triple liaison carbone-carbone.

10. Matière de revêtement selon la revendication 9, **caractérisée en ce que** la liaison activable par un rayonnement actinique est une double liaison carbone-carbone.

11. Matière de revêtement selon l'une quelconque des revendications 1 à 10, **caractérisée en ce que** le groupe activable par un rayonnement actinique est un groupe (méth)acrylate.

12. Matière de revêtement selon l'une quelconque des revendications 1 à 11, **caractérisée en ce que** les composés (b1) sont choisis dans le groupe constitué par le monoacrylate de cyclohexanediméthanol (CDMMA), le monoacrylate de tricyclododécanediméthanol (TDDMMA) et l'acrylate de 4-hydroxybutyle.

13. Matière de revêtement selon l'une quelconque des revendications 1 à 12, **caractérisée en ce que** les nanoparticules (C) sont choisies dans le groupe constitué par le dioxyde de silicium et l'oxyde d'aluminium.

14. Matière de revêtement selon l'une quelconque des revendications 1 à 13, **caractérisée en ce qu'**elle contient, par rapport à sa quantité totale,
- de 5 à 40 % en poids, de préférence de 10 à 35 % en poids et en particulier de 15 à 30 % en poids d'au moins un diluant réactif (A),
- de 5 à 40 % en poids, de préférence de 10 à 35 % en poids et en particulier de 10 à 30 % en poids d'au moins un oligomère et/ou polymère (A) et
- de 5 à 40 % en poids, de préférence de 10 à 35 % en poids et en particulier de 10 à 30 % en poids d'au moins une résine alkyde (A).

15. Matière de revêtement selon l'une quelconque des revendications 1 à 14, **caractérisée en ce qu'**elle contient, par rapport à sa quantité totale, le composant (B) en une quantité de 10 à 50 % en poids, de préférence de 15 à 45 % en poids et en particulier de 20 à 40 % en poids.

16. Matière de revêtement selon l'une quelconque des revendications 1 à 15, **caractérisée en ce qu'**elle contient, par rapport à sa quantité totale, les nanoparticules (C) en une quantité de 1 à 25 % en poids, de préférence de 2 à 20 % en poids et en particulier de 3 à 15 % en poids.

17. Matière de revêtement selon l'une quelconque des revendications 1 à 16, **caractérisée en ce qu'**elle contient au moins un additif (D).

18. Matière de revêtement selon la revendication 17, **caractérisée en ce que** l'additif (D) est choisi dans le groupe constitué par des composés contenant des groupes époxy, des acides polyphosphoriques, des siccatifs, des pigments organiques et pigments inorganiques, non couvrants, colorés ou incolores, à effet optique, conducteurs de l'électricité, antimagnétiques et fluorescents, des agents anti-dépôt, des liants oligomères et liants polymères, différents des composants (A), des absorbeurs UV, des photoprotecteurs, des capteurs de radicaux, des photoamorceurs, des agents de désaération, des lubrifiants, des inhibiteurs de polymérisation, des antimousses, des émulsifiants et des agents mouillants, des promoteurs d'adhérence, des agents d'étalement, des adjuvants filmogènes, des additifs d'ajustement rhéologique et des agents ignifuges, en particulier des composés contenant des groupes époxy et des photoamorceurs.

19. Matière de revêtement selon la revendication 18, **caractérisée en ce que** les composés contenant des groupes époxy (D) sont des composés aromatiques contenant des groupes époxy.

20. Matière de revêtement selon la revendication 19, **caractérisée en ce que** les composés aromatiques contenant des groupes époxy (D) sont choisis dans le groupe constitué par les éthers diglycidyliques de bisphénol A, bisphénol F, bisphénol A hydrogéné, bisphénol F hydrogéné et tricyclododécanediméthanol.

21. Matière de revêtement selon l'une quelconque des revendications 17 à 20, **caractérisée en ce qu'**elle contient, par rapport à sa quantité totale, les composés contenant des groupes époxy (D) en une quantité de 1 à 20 % en poids, de préférence de 5 à 17 % en poids, et en particulier de 5 à 15 % en poids.

22. Procédé pour la préparation de la matière de revêtement selon l'une quelconque des revendications 1 à 21, **caractérisé en ce qu'**on mélange entre eux au moins les composants (A), (B) et (C) et on homogénéise le mélange résultant.

23. Utilisation de la matière de revêtement selon l'une quelconque des revendications 1 à 21 et de la matière de revêtement préparée à l'aide du procédé selon la revendication 22, pour la production de revêtements de rubans continus (*Coil-Coatings*).

24. Utilisation selon la revendication 23, **caractérisée en ce que** les revêtements de rubans continus sont des couches primaires anticorrosion qui adhèrent solidement.
